# EUROPÄISCHE PATENTSCHRIFT

(11) **EP 4 312 090 B1**
(45) Veröffentlichungstag und Bekanntmachung des Hinweises auf die Patenterteilung: **28.05.2025**
(21) Anmeldenummer: 22187089.2
(22) Anmeldetag: 26.07.2022
(51) Int. Cl.: G05B 13/04, G05B 17/02

(54) **VERFAHREN ZUR IDENTIFIKATION EINES PROZESSMODELLS FÜR EINE MODELLBASIERTE, PRÄDIKTIVE MEHRGRÖSSENREGELUNG EINER PROZESSANLAGE**
METHOD FOR IDENTIFYING A PROCESS MODEL FOR MODEL-BASED PREDICTIVE MULTIVARIABLE CONTROL OF A PROCESS PLANT
PROCÉDÉ D'IDENTIFICATION D'UN MODÈLE DE PROCESSUS POUR UNE RÉGULATION PRÉDICTIVE BASÉE SUR UN MODÈLE DE PLUSIEURS GRANDEURS D'UNE INSTALLATION DE PROCESSUS

(43) Veröffentlichungstag der Anmeldung: 31.01.2024
(73) Patentinhaber: Siemens Aktiengesellschaft, 80333 München (DE)
(72) Erfinder: Pfeiffer, Bernd-Markus, 91080 Uttenreuth (DE)
(74) Vertreter: Siemens Patent Attorneys

(56) Entgegenhaltungen:
- WO-A2-2007/124002
- US-A1- 2015 309 486

## Beschreibung

Die Erfindung betrifft ein computerimplementiertes Verfahren zur automatisierten Identifikation eines Prozessmodells für eine modellbasierte, prädiktive Mehrgrößenregelung einer Prozessanlage, wobei auf zuvor bereits definierte Regelgrößen, Stellgrößen und Störgrößen für die modellbasierte, prädiktive Mehrgrößenregelung der Prozessanlage zurückgegriffen wird. Die Erfindung betrifft außerdem ein Leitsystem für eine technische Anlage, insbesondere Fertigungs- oder Prozessanlage.

Modellbasierte, prädiktive Regler (MPC: Model Predictive Control) stellen das erfolgreichste technische Verfahren zur Mehrgrößenregelung in verfahrenstechnischen Prozessen dar. Diese Regler benötigen ein (zumeist lineares) dynamisches Prozessmodell, das üblicherweise aus Prozessdaten identifiziert wird. Eine Identifikation von Prozessmodellen aus Messdaten setzt voraus, dass der Prozess hinreichend stark angeregt wird, so dass sein dynamisches Verhalten in den Messdaten erkennbar wird.

Eine Problemstellung stellt dabei die Planung und Durchführung spezieller aktiver Versuche in der Anlage dar, die der Generierung von Messdaten dienen, die einen hinreichenden Informationsgehalt für die Identifikation der Prozessmodelle aufweisen.

Bei MPC-Applikationen werden drei Arten von Variablen unterschieden, die für die Identifizierung des Prozessmodells benötigt werden:
- Regelgrößen= Controlled Variables (CV), für die später ein Sollwert vorgegeben werden soll
- Stellgrößen= Manipulated Variables (MV), die vom MPC verstellt werden dürfen. Meist handelt es sich dabei um Sollwerte vorhandener Regler in der Basisautomatisierung der Prozessanlage
- Messbare Störgrößen= Disturbance Variables (DV), die einen signifikanten Einfluss auf Regelgrößen haben, aber vom MPC nicht aktiv verstellt werden können.

Das übliche Verfahren zur Anregung dynamischer Prozesse sind sog. Sprungversuche. Dabei müssen alle Stellgrößen, die als Eingangsvariablen für das Prozessmodell dienen sollen (MVs), sukzessive mit einem Sprung oder mehreren Sprüngen geeigneter Höhe und Dauer angeregt werden. Die Planung solcher Sprungversuche erfordert zum einen praktische Erfahrung mit dem oder den technischen Prozessen der Prozessanlage. Zum anderen ist ein tiefes regelungstechnische Verständnis notwendig, um "informationsreiche" Messdaten erzeugen zu können. Üblicherweise erfolgt die Planung in intensiven Diskussionen zwischen dem Anlagenbetreiber, den dortigen Anlagenfahrern und dem regelungstechnischen Dienstleister, der die MPC Lösung entwickeln soll.

In der WO 2008/145154 A1 ist ein Verfahren zur Überwachung eines automatisierten Produktionsprozesses angegeben.

US 2015/309486 A1 offenbart ein Engineering-Tool zur automatischen Berechnung von Gewichtungsfaktoren für einen modellbasierten prädiktiven Regler, wobei die Modellqualität durch Analyse von Manipulationsvariablen ermittelt wird und diese mit den Prozessantworten verglichen wird. Dadurch wird eine bessere Leistung und Stabilität des Reglers erreicht. Zudem können die Gewichtungsfaktoren vom Bediener angepasst werden.

WO 2007/124002 A2 offenbart ein System zur Erkennung abnormaler Ereignisse in den Prozessanlagen eines verzögerten Kokereisystems, wobei Online-Messungen mit Modellen normaler Betriebszustände verglichen werden, um Abweichungen und Anomalien zu identifizieren, wobei die Modelle auf Hauptkomponentenanalyse oder Ingenieurmodellen basieren und verschiedene Betriebsmodi berücksichtigen. Das System hilft dem Betreiber, frühzeitig Fehler zu erkennen und den Prozess effizient zu steuern.

Der Erfindung liegt daher die Aufgabe zugrunde, die Identifizierung des Prozessmodells für eine modellbasierte, prädiktive Mehrgrößenregelung einer Prozessanlage zu automatisieren und den mit der Identifizierung verbundenen Aufwand deutlich zu reduzieren.

Gemäß der Erfindung wird die Aufgabe durch das in Anspruch 1 angegebene Verfahren und das in Anspruch 4 angegebene Leitsystem gelöst.

Gegenstand der Erfindung ist ein computerimplementiertes Verfahren zur automatisierten Identifikation eines Prozessmodells für eine modellbasierte, prädiktive Mehrgrößenregelung einer Prozessanlage, wobei auf zuvor bereits definierte Regelgrößen, Stellgrößen und Störgrößen für die modellbasierte, prädiktive Mehrgrößenregelung der Prozessanlage zurückgegriffen wird, mit folgenden Schritten:
- Bereitstellen von historischen Messdaten aus einem Produktionsbetrieb der Prozessanlage in einem Archiv, wobei während des Produktionsbetriebs die Stellgrößen konstant waren,
- Ermitteln des jeweiligen Arbeitspunktes aller Stellgrößen sowie eines jeweiligen Arbeitspunktes und einer jeweiligen Standardabweichung aller Regelgrößen aus den historischen Messdaten,
- Vorgeben einer erlaubten Abweichung jeder Regelgröße von dem Arbeitspunkt der jeweiligen Regelgröße, wobei die erlaubte Abweichung insbesondere ein Sechsfaches der Standardabweichung der jeweiligen Regelgröße beträgt,
- Abtasten der Regelgrößen, Stellgrößen und Störgrößen mit einer konstanten Abtastzeit,
- Vorsehen einer jeweiligen Tiefpassfilterung für die Regelgrößen, wobei die Filterzeitkonstante derart gewählt wird, dass die Standardabweichung der jeweiligen Regelgröße mit der Tiefpassfilterung um einen Faktor 2 bis 6, vorzugweise 3 bis 5, kleiner ist als ohne die Tiefpassfilterung,
- Für jede Stellgröße schrittweises Durchführen der folgenden Schritte:
   a) Von dem Arbeitspunkt ausgehend wird die Stellgröße rampenförmig angeregt, bis ein Wert mindestens einer der Regelgrößen außerhalb eines Toleranzbandes um den jeweiligen Arbeitspunkt der Regelgrößen liegt, wobei das Toleranzband jeweils ein Zweifaches der Standardabweichung der jeweiligen Regelgröße beträgt,
   b) Bestimmen der Anregungsamplitude der Stellgröße, die in Schritt a für das Verlassen des Toleranzbandes der mindestens einen der Regelgrößen notwendig war,
   c) Rückfahren der Stellgröße auf deren Arbeitspunkt und Warten, bis jede Regelgröße wieder einen stationären Zustand aufweist,
   d) Sprunghafte Anregung der Stellgröße mit der positiven, zweifachen Anregungsamplitude und Warten, bis jede Regelgröße wieder einen stationären Zustand aufweist,
   e) Sprunghafte Anregung der Stellgröße mit der negativen, vierfachen Anregungsamplitude und Warten, bis jede Regelgröße wieder einen stationären Zustand aufweist,
   f) Sprunghafte Anregung der Stellgröße mit der positiven, zweifachen Anregungsamplitude und Warten, bis jede Regelgröße wieder einen stationären Zustand aufweist,
      wobei bei den Schritten d, e unverzüglich in den darauffolgenden Schritt gewechselt wird, wenn eine der Regelgrößen die vorgegebene erlaubte Abweichung überschreitet,
   g) Hinterlegen der Werte der Regelgrößen, Stellgrößen und Störgrößen während der Durchführung der Schritte a bis f in einem computerimplementierten Datenspeicher,
- Verwenden der in dem computerimplementierten Datenspeicher hinterlegten Werte der Regelgrößen, Stellgrößen und Störgrößen zur automatisierten Identifikation des Prozessmodells für die modellbasierte, prädiktive Mehrgrößenregelung der Prozessanlage unter Verwendung der Methode der kleinsten Fehlerquadrate.

Die Erfindung geht davon aus, dass die für das Prozessmodell notwendigen Regelgrößen, Stellgrößen und Störgrößen bereits definiert worden sind. Weiterhin wird im Rahmen des erfindungsgemäßen Verfahrens auf Messdaten aus einem Produktionsbetrieb der Prozessanlage zurückgegriffen. Dabei wurden die Stellgrößen während der Aufnahme der Messdaten konstant gehalten.

Der Arbeitspunkt der Stellgrößen und der Regelgrößen kann gegebenenfalls aus Dokumentationsdaten eines Betreibers der Prozessanlage ausgelesen werden. Für die Ermittlung der Arbeitspunkte kann es aber auch notwendig sein, automatisiert jeweils den Mittelwert der Stellgröße aus den historischen Messdaten zu berechnen.

Die Vorgabe der jeweils erlaubten Abweichung der Regelgrößen von ihrem Arbeitspunkt kann auf Informationen eines Betreibers der Prozessanlage beruhen. Sie dient einem sicheren Betrieb der Prozessanlage und der Einhaltung einer definierten Produktqualität. Falls keine Informationen des Anlagenbetreibers vorliegen, kann die erlaubte Abweichung ein Sechsfaches der Standardabweichung der jeweiligen Regelgröße betragen. Dieser Wert hat sich in Versuchsreihen als besonders geeignet herausgestellt.

Die Regelgrößen, Stellgrößen und Störgrößen werden im Rahmen der Durchführung des erfindungsgemäßen Verfahrens mit einer konstanten Abtastzeit abgetastet, d.h. messtechnisch erfasst. Ohne sich hierauf zu beschränken, kann die Abtastzeit beispielweise 1 Sekunde betragen.

Zur Unterdrückung eines hochfrequenten Messrauschens werden die Regelgrößen in an sich bekannter Weise jeweils einer Filterung durch einen Tiefpass unterzogen. Der übrigbleibende Anteil der abgetasteten Regelgröße stellt dann das Nutzsignal dar. Die Filterzeitkonstante der Tiefpassfilterung kann beispielsweise, ohne sich darauf zu beschränken, einen Wert von 10 Sekunden betragen.

Iterativ werden für jede der definierten Stellgrößen die Verfahrensschritte a bis g durchgeführt. Im Verfahrensschritt a wird die jeweilige Stellgröße zunächst rampenförmig angeregt. Mathematisch ausgedrückt ist eine Kurve der Anregung stetig. Mit anderen Worten erfolgt die Anregung nicht sprungförmig, sondern in Form einer Rampe. Die Steigung der Rampe ist dabei relativ gering. Relativ gesehen muss die Steigung der Rampe so gering sein, dass die Regelgrößen der rampenförmigen Anregung mit einem gewissen "Schleppabstand" folgen können. Dabei kann im Rahmen des erfindungsgemäßen Verfahrens auf Erfahrungswerte von Anlagenfahrern zurückgegriffen werden. Eine Steigung der Rampe der Stellgröße kann beispielsweise 1% eines maximalen Wertes (einer maximalen Anregungsamplitude) der Stellgröße pro Sekunde betragen. Das Hochfahren der Rampe bis zum Maximalwert sollte mindestens so lange dauern, wie der Prozess nach einer sprungförmigen Anregung brauchen würde, um wieder auf einen neuen stationären Zustand einzuschwingen. Bei einem typischen verfahrenstechnischen Prozess (Destillationskolonne, Rührkesselreaktor) kann das mehrere Stunden dauern.

In den nachfolgenden Schritten d bis f wird die Stellgröße zunächst mit der zweifachen Anregungsamplitude nach oben, dann mit der vierfachen Anregungsamplitude nach unten und schließlich wieder mit der zweifachen Anregungsamplitude nach oben sprunghaft angeregt. Eine Kurve der Anregung ist hier demnach zwar stetig, aber nicht differenzierbar.

Es wird jeweils gewartet, bis jede Regelgröße einen stationären Zustand aufweist. Das Vorliegen des stationären Zustandes wird beispielsweise durch eine Überwachung des Gradienten des jeweiligen tiefpassgefilterten Signals der Regelgrößen überwacht. Wenn der Gradient in einem definierten Zeitfenster im Wesentlichen Null ist, kann eine stationärer Zustand angenommen werden. Die Länge des Zeitfensters und der noch erlaubte "Restgradient" hängen dabei in der Regel von der Prozessdynamik ab und können sich für verschiedene Prozessvariablen (Regelgrößen) voneinander unterscheiden.

Durch das erfindungsgemäße Verfahren wird automatisiert erreicht, dass sich jede Regelgröße um mindestens ein Vierfaches der jeweiligen Standardabweichung (also um 4σ) von ihrem Arbeitspunkt wegbewegt, und dort auf einen neuen stationären Zustand einschwingt. Damit hebt sich die Prozessanregung deutlich aus dem normalen Messrauschen ab. Bei einer normalverteilten Prozessvariablen ohne starke externe Störeinwirkungen kann davon ausgegangen werden, dass sich 99% der Messwerte ohne aktive Anregung in einem 3σ-Band um den Arbeitspunkt befinden.

Gleichzeitig wird sichergestellt, dass keine Regelgröße die erlaubte Abweichung (bspw. 6*σ*) um ihren Arbeitspunkt herum verlässt, um Sicherheit und Produktqualität nicht zu gefährden. In diesem Sinne handelt es sich um eine "minimalinvasive" Prozessanregung, die gerade so stark ist wie sie zur Identifikation erforderlich ist.

Durch die Abfolge von drei Sprüngen pro Stellgröße (hoch, ganz runter, zurück zur Mitte) wird ein Signalverlauf erreicht, der symmetrisch zum jeweiligen Arbeitspunkt ist und einen hohen Informationsgehalt für die dynamische Identifikation hat. Die Sprungfolge ist so aufgebaut, dass ein Weiterschalten zum nächsten Sprung die Wirkung des vorherigen Sprungs kompensiert, so dass eine Regelgröße, die gerade eine Grenze zu verletzen droht, dadurch wieder "eingefangen" wird, d.h. nicht weiter in die gefährliche Richtung wegläuft.

Im Weiteren wird die Erfindung beispielhaft anhand von Figuren erläutert; im Einzelnen zeigen:
- FIG 1: eine sprunghafte Anregung von Stellgrößen und eine Reaktion von Regelgrößen darauf; und
- FIG 2: einen Vergleich eines abgetasteten und eines modellierten zeitlichen Verlaufs einer Regelgröße.

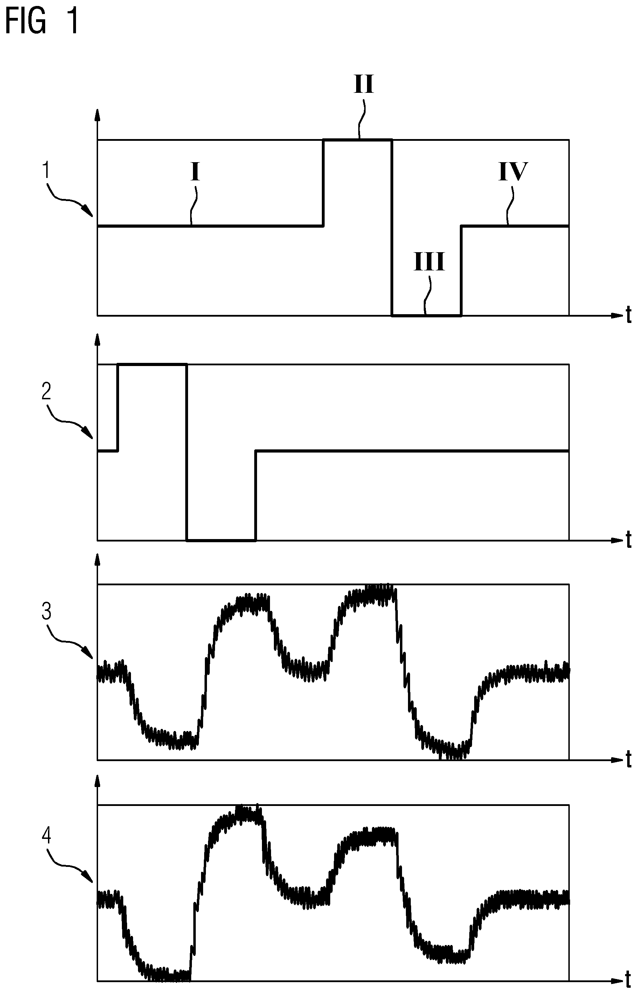

FIG 1 zeigt Signalwertverläufe von Stellgrößen und Regelgrößen bei Durchführung der Schritte d bis g eines erfindungsgemäßen Verfahrens. Es handelt sich hierbei exemplarisch um ein 2x2 Mehrgrößensystem mit zwei Stellgrößen und zwei Regelgrößen. Das erfindungsgemäße Verfahren wird durchgeführt, um ein Prozessmodell für eine modellbasierte, prädiktive Regelung des 2x2 Mehrgrößensystems zu identifizieren. Die vorherigen Verfahrensschritte wurden dabei bereits durchgeführt.

FIG 1 zeigt einen ersten zeitlichen Verlauf 1 eines Signalwertes einer ersten Stellgröße, einen zweiten zeitlichen Verlauf 2 eines Signalwertes einer zweiten Stellgröße, einen dritten zeitlichen Verlauf 3 eines Signalwertes einer ersten Regelgröße und einen vierten zeitlichen Verlauf 4 eines Signalwertes einer zweiten Regelgröße. Die Signalwerte sind dabei jeweils nicht beziffert.

In dem ersten zeitlichen Verlauf 1 ist zu erkennen, dass die Stellgröße zunächst konstant mit einem mittleren Wert angeregt wird (Bereich I). Hierauf folgt ein sprunghafter Anstieg um das Zweifache der zuvor ermittelten Anregungsamplitude nach oben (Bereich II). Danach erfolgt ein Sprung um das vierfache der Anregungsamplitude nach unten (Bereich III). Schließlich erfolgt wiederum ein Sprung um das Zweifache der Anregungsamplitude nach oben, um wieder zu dem mittleren Ausgangsniveau zu gelangen (Bereich IV).

Der zweite zeitliche Verlauf 2 zeigt einen vergleichbaren Verlauf der zweiten Stellgröße. Die sprunghaften Anregungen der zweiten Stellgröße haben jedoch bereits vor den sprunghaften Anregungen der ersten Stellgröße stattgefunden.

Der dritte zeitliche Verlauf 3 und der vierte zeitliche Verlauf 4 zeigen die Reaktionen der ersten und zweiten Regelgröße auf die sprunghaften Anregungen der beiden Stellgrößen. Gut zu erkennen ist, dass nach einem Sprung einer der beiden Stellgrößen mit dem nächsten Sprung jeweils gewartet wird, bis die Regelgrößen einen im Wesentlichen stationären Wert aufweisen. Diese stationären Zustände sind in den zeitlichen Verläufen 3, 4 daran zu erkennen, dass sich der Signalwert der jeweiligen Regelgröße auf einen bestimmten Wert "einpendelt", die Kurve also nahezu waagrecht verläuft.

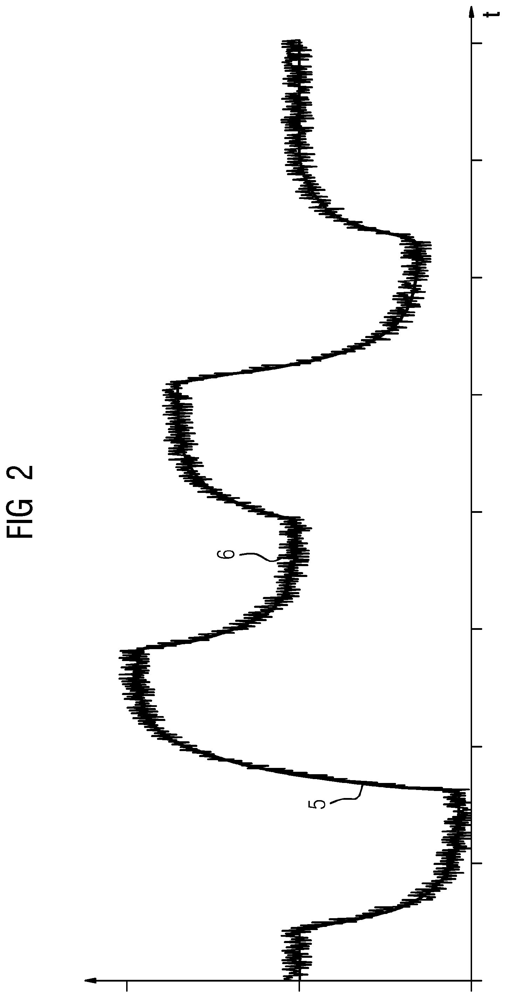

In FIG 2 ist als ein Ergebnis der Identifikation des Prozessmodells ein modellierter zeitlicher Verlauf 5 der ersten Regelgröße gegenüber dem messtechnisch erfassten (abgetasteten und gefilterten) Verlauf 6 der ersten Regelgröße dargestellt. Die durchgehende, ohne erkennbare Schwingungen verlaufende Kurve stellt dabei den modellierten Verlauf dar. Die nach oben und unten schwingende Kurve stellt dabei den messtechnisch erfassten Verlauf dar. Es ist gut zu erkennen, dass der modellierte Verlauf 5 sehr gut dem messtechnisch erfassten Verlauf 6 folgt. Das mit Hilfe des erfindungsgemäßen Verfahrens identifizierte Prozessmodell bildet demnach mit einer hohen Güte den tatsächlichen Prozess ab.

## Patentansprüche

1. Computerimplementiertes Verfahren zur automatisierten Identifikation eines Prozessmodells für eine modellbasierte, prädiktive Mehrgrößenregelung einer Prozessanlage, wobei auf zuvor bereits definierte Regelgrößen, Stellgrößen und Störgrößen für die modellbasierte, prädiktive Mehrgrößenregelung der Prozessanlage zurückgegriffen wird, das Verfahren umfassend:
- Bereitstellen von historischen Messdaten aus einem Produktionsbetrieb der Prozessanlage in einem Archiv, wobei während des Produktionsbetriebs die Stellgrößen konstant waren,
und **gekennzeichnet durch** die Schritte:
- Ermitteln des jeweiligen Arbeitspunktes aller Stellgrößen sowie eines jeweiligen Arbeitspunktes und einer jeweiligen Standardabweichung aller Regelgrößen aus den historischen Messdaten,
- Vorgeben einer erlaubten Abweichung jeder Regelgröße von dem Arbeitspunkt der jeweiligen Regelgröße, wobei die erlaubte Abweichung insbesondere ein Sechsfaches der Standardabweichung der jeweiligen Regelgröße beträgt,
- Abtasten der Regelgrößen, Stellgrößen und Störgrößen mit einer konstanten Abtastzeit,
- Vorsehen einer jeweiligen Tiefpassfilterung für die Regelgrößen, wobei eine Filterzeitkonstante der Tiefpassfilterung derart gewählt wird, dass die Standardabweichung der jeweiligen Regelgröße mit der Tiefpassfilterung um einen Faktor 2 bis 6, vorzugweise 3 bis 5, kleiner ist als ohne die Tiefpassfilterung,
- Für jede Stellgröße schrittweises Durchführen der folgenden Schritte:
a) Von dem Arbeitspunkt ausgehend wird die Stellgröße rampenförmig angeregt, bis ein Wert mindestens einer der Regelgrößen außerhalb eines Toleranzbandes um den jeweiligen Arbeitspunkt der Regelgrößen liegt, wobei das Toleranzband jeweils ein Zweifaches der Standardabweichung der jeweiligen Regelgröße beträgt,
b) Bestimmen der Anregungsamplitude der Stellgröße, die in Schritt a für das Verlassen des Toleranzbandes der mindestens einen der Regelgrößen notwendig war,
c) Rückfahren der Stellgröße auf deren Arbeitspunkt und Warten, bis jede Regelgröße wieder einen stationären Zustand aufweist,
d) Sprunghafte Anregung der Stellgröße mit der positiven, zweifachen Anregungsamplitude und Warten, bis jede Regelgröße wieder einen stationären Zustand aufweist,
e) Sprunghafte Anregung der Stellgröße mit der negativen, vierfachen Anregungsamplitude und Warten, bis jede Regelgröße wieder einen stationären Zustand aufweist,
f) Sprunghafte Anregung der Stellgröße mit der positiven, zweifachen Anregungsamplitude und Warten, bis jede Regelgröße wieder einen stationären Zustand aufweist,
wobei bei den Schritten d, e unverzüglich in den darauffolgenden Schritt gewechselt wird, wenn eine der Regelgrößen die vorgegebene erlaubte Abweichung überschreitet,
g) Hinterlegen der Werte der Regelgrößen, Stellgrößen und Störgrößen während der Durchführung der Schritte a bis f in einem computerimplementierten Datenspeicher,
- Verwenden der in dem computerimplementierten Datenspeicher hinterlegten Werte der Regelgrößen, Stellgrößen und Störgrößen zur automatisierten Identifikation des Prozessmodells für die modellbasierte, prädiktive Mehrgrößenregelung der Prozessanlage unter Verwendung der Methode der kleinsten Fehlerquadrate.

2. Verfahren nach Anspruch 1, bei dem für die Ermittlung der Arbeitspunkte jeweils ein Mittelwert der Stellgröße aus den historischen Messdaten berechnet wird.

3. Verfahren nach Anspruch 1 oder 2, bei dem das identifizierte Prozessmodell im Rahmen eines Betriebs der Prozessanlage zur modellbasierten, prädiktiven Mehrgrößenregelung der Prozessanlage verwendet wird.

4. Leitsystem für eine technische Anlage, insbesondere Fertigungs- oder Prozessanlage, welches einen Computer umfasst, der dazu ausgebildet ist, ein Verfahren gemäß einem der Ansprüche 1 bis 3 auszuführen.

5. Computerprogrammprodukt umfassend Befehle, die bei Ausführen mittels einer Datenverarbeitungseinrichtung ein Verfahren gemäß einem der Ansprüche 1 bis 3 ausführt.

## Claims

1. Computer-implemented method for the automated identification of a process model for a model-based, predictive multivariable control of a process installation, wherein reference is made to previously defined controlled variables, manipulated variables and disturbance variables for the model-based, predictive multivariable control of the process installation, the method comprising:
- providing historical measured data from a production operation of the process installation in an archive, wherein the manipulated variables were constant during the production operation,
and **characterised by** the steps:
- determining the respective operating point of all manipulated variables and a respective operating point and a respective standard deviation of all controlled variables from the historical measured data,
- specifying a permitted deviation of each controlled variable from the operating point of the respective controlled variable, wherein the permitted deviation in particular amounts to six times the standard deviation of the respective controlled variable,
- sampling the controlled variables, manipulated variables and disturbance variables with a constant sampling time,
- providing a respective low-pass filtration for the controlled variables, wherein a filter time constant of the low-pass filtration is selected such that the standard deviation of the respective controlled variable is smaller by a factor of 2 to 6, preferably 3 to 5, with the low-pass filtration than without the low-pass filtration,
- carrying out the following steps consecutively for each manipulated variable:
a) starting from the operating point, the manipulated variable is excited in a ramp-shaped manner until a value of at least one of the controlled variables lies outside a tolerance band about the respective operating point of the controlled variables, wherein the tolerance band amounts in each case to twice the standard deviation of the respective controlled variable,
b) determining the excitation amplitude of the manipulated variable which was required in step a for the at least one of the controlled variables to leave the tolerance band,
c) returning the manipulated variable to its operating point and waiting until each controlled variable once again has a steady state,
d) exciting the manipulated variable in a stepped manner with the positive twofold excitation amplitude and waiting until each controlled variable once again has a steady state,
e) exciting the manipulated variable in a stepped manner with the negative fourfold excitation amplitude and waiting until each controlled variable once again has a steady state,
f) exciting the manipulated variable in a stepped manner with the positive twofold excitation amplitude and waiting until each controlled variable once again has a steady state,
wherein in the steps d, e an immediate transition is made to the subsequent step if one of the controlled variables exceeds the specified permitted deviation,
g) storing the values of the controlled variables, manipulated variables and disturbance variables during the execution of steps a to f in a computer-implemented data memory,
- using the values of the controlled variables, manipulated variables and disturbance variables stored in the computer-implemented data memory for the automated identification of the process model for the model-based, predictive multivariable control of the process installation using the method of the least error squares.

2. Method according to claim 1, in which for the determination of the operating points in each case a mean value of the manipulated variable is calculated from the historical measured data.

3. Method according to claim 1 or 2, in which the identified process model is used during operation of the process installation for the model-based, predictive multivariable control of the process installation.

4. Control system for a technical installation, in particular manufacturing installation or process installation, comprising a computer which is embodied to carry out a method according to one of claims 1 to 3.

5. Computer program product comprising commands, which carries out a method according to one of claims 1 to 3 when it is executed by means of a data processing facility.

## Revendications

1. Procédé mis en œuvre par ordinateur d'identification automatisée d'un modèle de processus pour une régulation prédictive à plusieurs grandeurs, reposant sur un modèle, d'une installation de processus, dans lequel on se reporte, pour la régulation prédictive à plusieurs grandeurs, reposant sur un modèle de l'installation de processus, à des grandeurs réglées, à des grandeurs réglantes et à des grandeurs perturbatrices déjà définies auparavant, le procédé comprenant :
- se procurer des données de mesure historiques à partir d'un fonctionnement en production de l'installation de processus dans une archive, dans lequel, pendant le fonctionnement en production, les grandeurs réglantes étaient constantes,
et **caractérisé par** les stades :
- détermination du point de travail respectif de toutes les grandeurs réglantes ainsi que d'un point de travail respectif et d'un écart-type respectif de toutes les grandeurs réglées à partir des données de mesure historiques,
- prescription d'un écart autorisé de chaque grandeur réglée au point de travail de la grandeur réglée respective, dans lequel l'écart autorisé représente en particulier six fois l'écart-type de la grandeur réglée respective,
- échantillonnage des grandeurs réglées, des grandeurs réglantes et des grandeurs perturbatrices avec un temps d'échantillonnage constant,
- mise en œuvre d'un filtrage passe bas respectif pour les grandeurs réglées, dans lequel on choisit une constante de temps du filtrage passe bas, de manière à ce que l'écart-type de la grandeur réglée respective soit, avec le filtrage passe bas, plus petit d'un facteur de 2 à 6, de préférence de 3 à 5, que sans le filtrage passe bas,
- pour chaque grandeur réglante, effectuer pas à pas les stades suivants :
a) en partant du point de travail, exciter la grandeur réglante en forme de rampe, jusqu'à ce qu'une valeur d'au moins l'une des grandeurs réglée soit en-dehors du bande de tolérance autour du point de travail respectif des grandeurs réglées, dans lequel la bande de tolérance représente respectivement le double de l'écart-type de la grandeur réglée respective,
b) déterminer l'amplitude d'excitation de la grandeur réglante, qui était nécessaire dans le stade a pour quitter la bande de tolérance de la au moins une des grandeurs réglées,
c) retourner la grandeur réglante à son point de travail et attendre jusqu'à ce que chaque grandeur réglée ait à nouveau un état stationnaire,
d) exciter, de manière erratique, la grandeur réglante avec deux fois l'amplitude d'excitation positive et attendre jusqu'à ce que chaque grandeur réglée ait à nouveau un état stationnaire,
e) exciter, de manière erratique, la grandeur réglante avec quatre fois l'amplitude d'excitation négative et attendre jusqu'à ce que chaque grandeur réglée ait à nouveau un état stationnaire,
f) exciter, de manière erratique, la grandeur réglante avec deux fois l'amplitude d'excitation positive et attendre jusqu'à ce que chaque grandeur réglée ait à nouveau un état stationnaire,
dans lequel on passe dans les stades d, e sans délai au stade suivant, si l'une des grandeurs réglées dépasse l'écart autorisé donné à l'avance,
g) mettre les valeurs des grandeurs réglées, grandeurs réglantes et grandeurs perturbatrices pendant l'exécution des stades a à f dans une mémoire de données mise en œuvre par ordinateur,
- utiliser les valeurs, mises dans la mémoire de données mise en œuvre par ordinateur, des grandeurs réglées, grandeurs réglantes et grandeurs perturbatrices pour l'identification automatisée du modèle de processus pour la régulation prédictive à plusieurs grandeurs, reposant sur un modèle, de l'installation de processus en utilisant le procédé des moindres carrés des erreurs.

2. Procédé suivant la revendication 1, dans lequel, pour la détermination des points de travail, on calcule respectivement une valeur moyenne de la grandeur réglante à partir des données de mesure historiques.

3. Procédé suivant la revendication 1 ou 2, dans lequel on utilise le modèle de processus identifié dans le cadre d'un fonctionnement de l'installation de processus, pour la régulation prédictive à plusieurs grandeurs, reposant sur un modèle, de l'installation de processus.

4. Système de conduite d'une installation technique, en particulier d'une installation de fabrication ou de processus, qui comprend un ordinateur, qui est constitué pour exécuter un procédé suivant l'une des revendications 1 à 3.

5. Produit de programme d'ordinateur comprenant des instructions qui, lors de l'exécution au moyen d'un dispositif de traitement de données, exécute un procédé suivant l'une des revendications 1 à 3.
